# EUROPEAN PATENT APPLICATION

(11) **EP 3 753 402 A1**
(43) Date of publication of application: **23.12.2020**
(21) Application number: 19754669.0
(22) Date of filing: 15.02.2019
(51) Int. Cl.: A01K 61/80, A01K 61/00

(54) **FEEDING APPARATUS FOR CEPHALOPODS, FEEDING METHOD, AND CEPHALOPODS**

(30) Priority: 15.02.2018 JP 2018025412
(71) Applicant: NIPPON SUISAN KAISHA, LTD., Minato-ku Tokyo 105-8676 (JP)
(72) Inventor: MORISHIMA, Kagayaki, Saiki-shi, Oita 876-1204 (JP)
(74) Representative: Mewburn Ellis LLP
(86) International application number: PCT/JP2019/005683
(87) International publication number: WO 2019/160111

(57) **Abstract**

Feeding apparatus for cephalopods comprises an outer shell (1) having a recessed part (1a), and feed (2) disposed in the recessed part.

## Description

### TECHNICAL FIELD

The present invention relates to a cephalopod feeder, to a feeding method using the same, and to cephalopods reared by the feeding method.

### BACKGROUND ART

In recent years, since consumers have strong preferences and interests in resource conservation, there is a demand for the development of aquaculture techniques for cephalopods.

For example, Patent Document 1 discloses an octopus raising shelter and an octopus aquaculture system. Non-Patent Document 1 discloses observations on octopus raising.

On the other hand, in the aquaculture of cephalopods, although better feeding methods are becoming important, knowledge of cephalopod feeding methods has been insufficient.

### CITATION LIST

### Patent Literature

Patent Document 1: JP 2017-006054 A

### Non-patent Literature

Non-Patent Document 1: Rosario Martinez et al., "rowth, survival and physiological condition of Octopus maya when fed a successful formulated diet", Aquaculture, April 20, 2014, No. 426-427, p. 310-317.

### SUMMARY OF THE INVENTION

### Technical Problem

As described above, for cephalopods, sufficient knowledge has not been obtained as to what feeding method should be used to better feed them and what kind of feeding method is better suited for improving the flesh quality of cultured cephalopods while maintaining an appropriate raising environment in aquaculture with the purpose of producing a source of food and other things.

In order to solve the above-described problems, the present invention is intended to provide a cephalopod feeder capable of better raising cephalopods, a feeding method using the same, and a cephalopod reared by the feeding method.

### Solution to the Problem

The present invention is described below.
[1] A cephalopod feeder including an outer shell having a concave portion and a feed placed in the concave portion.
[2] The feeder according to [1], in which the outer shell is shaped to be held by an arm of a cephalopod.
[3] The feeder according to [1] or [2], in which the outer shell has a strength capable of withstanding pressure from an arm of a cephalopod.
[4] The feeder according to any one of [1] to [3], in which the feed is an adherent feed.
[5] A method of feeding a cephalopod using the feeder according to any one of [1] to [4].
[6] A cephalopod reared by the feeding method according to [5].

### ADVANTAGEOUS EFFECTS OF THE INVENTION

The present invention can provide a feeder, a feeding method for cephalopods that can provide better feeding of them, prevent deterioration of the rearing environment, and better rear the cephalopods, and a cephalopod with improved flesh quality through such good rearing.

### BRIEF DESCRIPTION OF THE DRAWINGS

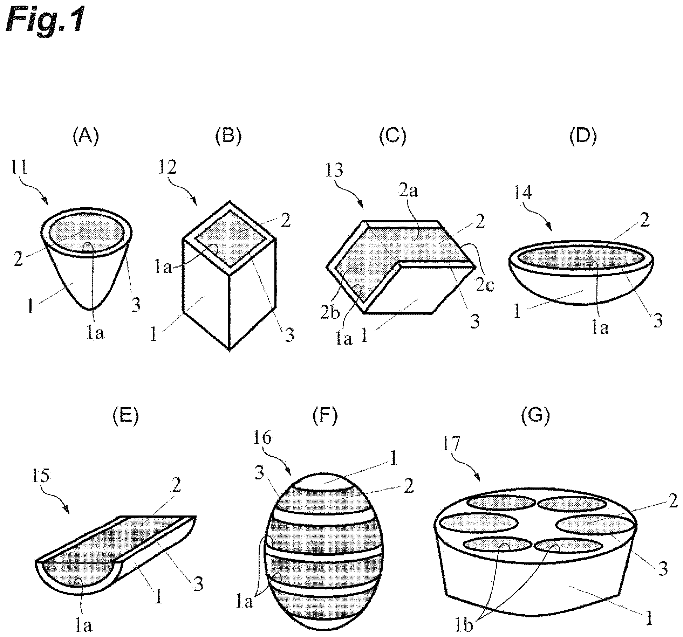

FIGS. 1A to 1G are schematic diagrams illustrating feeders.

### DESCRIPTION OF EMBODIMENTS

In the present specification, the term "step" includes not only an independent step but also a step that cannot be clearly distinguished from other steps, provided that an intended object of such a step is achieved.

In the present specification, numerical ranges indicated by "to" are ranges including the numerical values appearing before and after "to" as the minimum value and maximum value, respectively.

In the present specification, in a case where a plurality of substances corresponding to each component are present in the mixture, an amount of each component in the mixture means a total amount of the plurality of substances present in the mixture, unless otherwise specified.

In the present specification, the terms "not greater than" and "less than" in regard to percentages mean ranges including 0%, which is the case of "not contained", or a value undetectable by present means, unless a lower limit is specifically stated.

Feeders and feeding methods according to embodiments of the present invention will be described below.

A feeder (cephalopod feeding device) according to an embodiment of the present invention is used for raising cephalopods. The feeder may be installed in a tank for raising cephalopods, or outside the tank for raising cephalopods as long as the cephalopods can reach it with their arms and be fed.

The "arms" of cephalopods described in the present embodiment refer to protrusions that grow from the heads of cephalopods. Eight-armed cephalopods including octopus have eight arms, and ten-armed cephalopods including squid have ten arms. Of the ten arms possessed by the ten-armed cephalopods, the two long ones are called tentacles and may be used for eating a feed.

Cephalopods may be raised in a manner appropriate for the type of cephalopods. The raising of cephalopods may be performed in a land tank or in a marine cage. Raising in a land tank makes it easier to observe the feed intake. For raising cephalopods, a plurality of individuals may be raised together in a tank or a cage, or each one may be raised in an individual tank or a cage.

In the above-described raising environment, as to the installation of the feeder according to the present aspect, the device may be installed at the time of each feeding, or it may be installed permanently and the feed placed in the feeder replaced appropriately.

In addition, as to an embodiment of installation of the feeder, the device may be arranged at a predetermined installation location such as in a tank or, as long as the cephalopods can extend their arms and eat the feed, the device may be installed in a movable manner, for example, being suspended from above.

FIGS. 1A to 1G illustrate seven types of feeders 11 to 17. Hereinafter, the feeder 11 illustrated in FIG. 1A will be described as an example, and then the feeders 12 to 17 as modified examples will be described. The feeder 11 includes an outer shell 1 having a concave portion 1a and a feed 2 placed in the concave portion. The material of the outer shell 1 may be any material as long as it does not inhibit feeding of the cephalopods. The material for the outer shell 1 may be an artificial material such as metal, chinaware, ceramic, synthetic resin, wood, rubber, paper, leather, glass, or tile, or a natural material such as stone, shell, or bone. In a case where the outer shell 1 has enough strength to withstand the pressure from the arms of the cephalopods, the outer shell 1 does not collapse, dissipation of the feed placed in the concave portion is reduced, and deterioration of the water quality can be prevented, whereby an appropriate raising environment can be maintained.

The outer shell 1 of the feeder 11 has a cup shape having a concave portion 1a at the center. However, the outer shell 1 of the feeder 11 may have any shape as long as it can feed cephalopods. The shape may be a substantially spherical shape, a substantially columnar shape, a substantially conical shape, a substantially polyhedral shape, or a shape resembling a creature eaten by a cephalopod. Examples of organisms that are eaten by cephalopods include small fish, crustaceans, shellfish, hermit crabs and squid. The shape of the outer shell 1 of the feeder 11 may be a shape that can be held by arms of cephalopods. If the outer shell 1 of the feeder 11 has a shape that can be held by their arms of the cephalopods, more feed can be given to cephalopods that have a habit of drawing feed near their mouth for eating.

The size of the outer shell 1 of the feeder 11 is not particularly limited as long as cephalopods can extend their arms and eat the feed, but for example, when the cephalopods have a total length of 30 cm, the outer diameter may be approximately from 1 cm to 7 cm. By setting the size of the outer shell 1 of the feeder 11 to the above-described range, it becomes easier for cephalopods to hold the feed using their arms, so that eating by the cephalopods can be promoted.

The concave portion 1a of the outer shell 1 of the feeder 11 may have any shape as long as the feed can be placed inside the concave portion 1a. The concave portion 1a of the outer shell 1 of the feeder 11 may have a substantially hemispherical shape, a substantially groove shape, a substantially conical shape, or a substantially tubular shape penetrating the outer shell 1. In addition, a concave portion provided in natural materials, such as a stone, a shell, or a bone, may also be used as an outer shell of the feeder 11 as it is. The concave portion 1a of the outer shell 1 may be formed so as to cover at least half of the volume of the feed, or to wrap a portion of the feed so as to be fixed on the outer shell, thereby holding the feed in place inside the concave portion 1a.

The feed 2 is placed inside the outer edge of the concave portion 3, that is, inside the concave portion 1a of the outer shell 1. The feed 2 may be placed in any manner as long as it is held inside the concave portion 1a. A part of the feed 2 may be directly bonded to the outer shell 1, or even if it is not bonded to the outer shell 1, it may be placed so that it is held by being physically covered by the concave portion of the outer shell 1. When a part of the feed 2 is attached to the outer shell, the feed 2 is easily held by the outer shell 1 even if there is a water flow caused by, for example, the movement of the cephalopods, or by the movement of bubbles. An adherent feed can be produced by using a substance that adheres to the outer shell as a part of the feed 2. An adherent feed according to the present embodiment is a feed that can adhere to the concave portion of the outer shell 1 and maintain its shape. The adherent feed may have, for example, a viscosity of 10 Pa to 100 Pa. Also, the adherent feed may be a feed having physical properties that maintain its original shape when exposed to a water flow at a flow rate of 0.1, 1, 5, 10, or 15 cm/s. Also, the adherent feed may be a feed that easily breaks up in water. Breaking up may be determined by fragmentation such that the shape of the feed cannot be recognized. A feed that easily breaks up refers to, for example, a feed that breaks up in about 15 minutes when left standing in water and breaks up immediately when the cephalopods grab the feed. Examples of the substance for adhering to the outer shell 1 include proteins such as collagen, polysaccharides such as fucoidan and carrageenan, phospholipids such as egg membrane, glycoproteins, and glycolipids. Feed containing protein can promote the growth of cephalopods.

The surface shape of the outer shell 1 may be adjusted so that the feed 2 easily adheres to the outer shell 1 (particularly, inside the concave portion). Examples of the surface shaping include providing fine irregularities, and providing a plurality of fine grooves on the surface of the outer shell 1 (the surface inside the concave portion). The size of the irregularities provided on the surface of the outer shell 1 may be adjusted according to the characteristics of the feed 2.

The surface shape of the outer shell 1 to which the feed 2 does not adhere may be adjusted so that the cephalopods can easily hold it using their arms. Examples of the modification of the surface shaping include providing fine irregularities, and providing a plurality of fine grooves on the surface of the outer shell 1 (the surface inside the concave portion). The size of the irregularities provided on the surface of the outer shell 1 may be changed according to the type and characteristics of the cephalopods.

The feed 2 may be any feed as long as it can be eaten by cephalopods. The feed may be made using one or more feed ingredients. Examples of the feed ingredients include fish such as horse mackerel, mackerel and sardine, clams such as short-neck clam, freshwater clam and turban shell, crustaceans such as shrimp, crab and krill, and grains such as soybean, corn, rice and wheat.

The feed 2 may be a blended feed. The blended feed may include, for example, ground fish, shellfish, crustaceans, and cereals. In a case where a blended feed is used as a feed, it is easy to add a component that promotes the growth of cephalopods, and to cope flexibly with price fluctuations of feed ingredients. Examples of components that promote the growth of cephalopods include vitamins, minerals, hormones, prophylactics, therapeutics, sedatives and vaccines.

In a case where feeding cephalopods is performed using the feeder 11, the feeder 11 is placed at a position where the cephalopods can eat using their arms, with the feed 2 attached to the inside of the concave portion provided in the outer shell 1. When the cephalopods are interested in the feed, they extend their arms and eat the feed 2. Eating by the cephalopods is promoted by setting the feeder 11, to which the feed 2 is attached, accessible to the cephalopods. As described above, according to the feeder and the feeding method according to the present aspect, more feed can be continuously supplied to the cephalopods. In addition, the feeder and the feeding method according to the present embodiment promote feeding of cephalopods, such that residue of the feed in the raising environment and deterioration of the raising environment can be prevented. In addition, eating by the cephalopods reared by the above-described feeding method is promoted due to the improved raising environment, so that the nutritional status of the cephalopods is improved. As a result, damage to the arms or the surface of the body of the cephalopods is reduced, and the flesh quality of the cephalopods can be improved so that the taste and umami when served for food are enhanced. In addition, reduced arm or body surface damage can reduce the risk of infection.

The timing of feeding the cephalopods may be any time as long as the developed cephalopods can eat a protein-containing feed. By feeding using a feeder described in the present aspect, feed intake can be enhanced through eating with arms holding the feed. High feed intake can be maintained by setting the ratio of feeding using the feeder described in the present embodiment to 10% or higher, 20% or higher, 30% or higher, or 50% or higher of the quantity of feed for the cephalopods. Cephalopods that maintain high growth and have good flesh quality can be developed by feeding them using a feeder described in the present aspect for one month or more, two months or more, or three months or more. In addition, by performing feeding using a feeder described in the present aspect, it is possible for the cephalopods to learn that what is inside the feeder is food, and quickly eat it.

The timing of feeding cephalopods may be any time as long as the cephalopods can eat. When feeding is performed in a 24-hour cycle, the internal clock and the digestion and absorption cycle in the cephalopods are linked, whereby stress is reduced and growth is promoted. When giving a light-dark cycle during raising cephalopods, by linking the light-dark cycle with the feeding timing, the internal clock of the cephalopods synchronized with the light-dark cycle and the digestive absorption cycle are linked, whereby stress is reduced and growth is promoted. Feeding cephalopods may be performed by planned feeding giving a predetermined amount, or by satiation in which feed consumption is observed while feeding, and feeding is maintained as long as eating continues.

The cephalopods raised by the feeder of the present invention can be used not only for human food applications including raw foods, processed foods, frozen foods, chilled foods, and dried foods, but also as raw material for food, feed applications, ornamental applications, and as raw material for extracting useful components. The cephalopods raised by a feeder of the present invention are excellent in growth and rich in proteins, so they have good taste, contain many components that contribute to health, and are excellent for food applications.

Feeders 12 to 17 according to variations will be described with reference to FIGS. 1A to 1G. The feeder 12 illustrated in FIG. 1B is an example in which the outer shell 1 has a substantially square pillar shape. In addition, the outer edge of the concave portion 3 is rectangular in plan view, and the concave portion 1a of the outer shell 1 is also substantially square pillar-shaped. The outer shape of the feeder 13 illustrated in FIG. 1C formed of an outer shell 1 and a feed 2 is substantially a square pillar shape, like the feeder 12, but can be regarded as having the side wall is partially removed as compared with the feeder 12. The outer shell 1 of the feeder 13 has a square pillar shape part (one side) of which is open, the inner side thereof being a concave portion 1a, and a feed 2 is placed therein. As a result, the feed 2 is exposed at the opening 2a and at the openings 2b and 2c at both ends of the square pillar outer shell 1 (the opening 2c is an end opposite to the opening 2b). For this reason, cephalopods can easily eat the feed using the openings 2a to 2c.

The feeder 14 illustrated in FIG. 1D has a cup shape having a concave portion 1a at the center similarly to the feeder 11, but its depth is smaller than that of the feeder 11. Therefore a large exposed surface of the feed 2 is secured, so that cephalopods can easily eat the feed 2. The feeder 15 illustrated in FIG. 1E has a semicircular arc shape in cross section, and the feed 2 is attached to the inside of the arc portion of an outer shell 1 extending in the depth direction in the figure. That is, the inside of the arc portion functions as a concave portion 1a. In the case of a feeder 15 having such a shape, the exposed surface of the feed 2 becomes large, similarly to the feeder 13, so that cephalopods can easily ingest the feed 2.

In the feeder 16 illustrated in FIG. 1F, an outer shell 1 has a substantially ball shape, and a plurality of groove-shaped concave portions 1a extending in the circumferential direction are formed around the outer shell 1, and a feed 2 is attached to the inside. A concave portion outer edge 3 is formed between two adjacent grooves. Like the feeder 16, a plurality of concave portions 1a for accommodating the feed 2 may be provided in one outer shell 1. Even in the case of such a configuration, the exposed surface of the feed 2 is large, so that cephalopods can easily eat the feed 2. In the feeder 17 illustrated in FIG. 1G, a plurality of through-holes 1b (six in FIG. 1G) are provided in a columnar outer shell 1, and a feed 2 is filled in each through-hole 1b. That is, the through-hole 1b functions as a concave portion for accommodating the feed 2. Also in the feeder 17, similarly to the feeder 16, a plurality of concave portions for accommodating the feed 2 are provided in one outer shell 1. In order to hold the feed 2, the through-hole 1b does not have to penetrate. In this manner, the shape of the feeder may be appropriately changed. Further, the shapes of the outer shell and the concave portion may be appropriately changed. Note that a feeder combining features of different feeders among the feeders 11 to 17 may be used.

### EXAMPLES

Embodiments of the present invention are described below in detail using examples. However, the present invention is not limited in any manner by these examples. Unless specified otherwise, "%" is indicated on a mass basis.

### (1) RAISING OF COMMON OCTOPUS

### Example 1

A synthetic resin pipe having a length of 5 cm and an outer diameter of 20 mm was prepared as an outer shell. Minced fish meat was filled as a feed into a concave portion of the pipe having an inner diameter of 18 mm, thus producing a feeder according to Example 1. In this feeder the outer shell 1 is cylindrical, and a cylindrical region inside the pipe is the concave portion for accommodating the feed.

A feeder according to Example 1 was used for five common octopuses of about 200 g in a land tank; the common octopuses immediately held the feeder with their arms and started eating the feed. Thirty minutes later, the feed placed in the concave portion of the synthetic resin pipe was completely consumed. In addition, the type of feed was changed, and a feed prepared by mixing minced fish meat and minced shellfish meat, and a feed prepared by mixing minced fish meat with 20% gelatin, were fed to the common octopuses in the same manner. In each case the common octopuses immediately held the pipe as a feeder with their arms and started eating the feeds, and after 30 minutes, had completely eaten the feed placed in the concave portion of the synthetic resin pipe.

### Comparative Example 1

For Comparative Example 1, a feed containing 20% gelatin mixed with minced fish meat was directly fed to the common octopuses without being placed in the outer shell. As a result, the common octopuses held the feed with their arms, but stopped eating the feeds part-way through, and about 50% or more of the feed remained in the tank. In addition, the remaining feeds broke up in the water, so that the water quality deteriorated and the broken feeds were not eaten.

The type of feed was changed; a feed containing from 1 to 5% salt in minced fish meat and a feed containing 5% starch in minced fish meat were prepared, and fed to the common octopus as they were without being placed in the outer shell. As a result, in each case, the common octopuses held the feeds with their arms, but stopped eating the feeds part-way through, and about 50% or more of the feeds remained in the tank. The remaining feeds broke up in the water, so that the water quality deteriorated and the broken feeds were not eaten. In addition, the breaking up of the feed was also observed during feed eating by the common octopuses, and the water quality deteriorated even in the rare case where the feeds were completely eaten. When these feeds were given for three days or more, in some cases no feed was eaten, and stagnation of growth was observed.

In Example 1 minced fish meat alone was used as feed, but the minced fish meat was weakly formed and could not be fed directly to the common octopuses.

### (2) EVALUATION OF RAISING PERFORMANCE

The common octopuses cultured with the feeds used in Example 1 showed a strong appetite continuously for three months or more. As for the raising results, the survival rate was 100%, and the body weight of each octopus increased five times or more. All of the octopuses had less damage to their arms and body surface, and when provided for human consumption, had a rich taste and a strong umami. In the common octopuses cultured with the feeds used in Comparative Example 1, damage to their arms and body surface was observed.

As described above, according to the present invention, feed intake by cephalopods can be improved. Further, according to the present invention, deterioration of a raising environment for cephalopods can be prevented. Further, according to the present invention, it is possible to obtain cephalopods having a good taste and a large amount of components contributing to health.

### Reference Signs List

- 1: Outer shell
- 1a: Concave portion
- 1b: Through-hole
- 2: Feed
- 3: Outer edge of concave portion
- 11 - 17: Feeders

## Claims

1. A cephalopod feeder comprising an outer shell having a concave portion and a feed placed in the concave portion.

2. Feeder according to claim 1, wherein the outer shell is shaped to be held by an arm of a cephalopod.

3. Feeder according to claim 1 or 2, wherein the outer shell has a strength capable of withstanding pressure from an arm of a cephalopod.

4. Feeder according to any one of claims 1 to 3, wherein the feed is an adherent feed.

5. A method of feeding a cephalopod using a feeder according to any one of claims 1 to 4.

6. A cephalopod reared by a feeding method according to claim 5.
